(19) Europäisches Patentamt
European Patent Office
Office européen des brevets

(11) Veröffentlichungsnummer: **0 336 240**
**A2**

(12) # EUROPÄISCHE PATENTANMELDUNG

(21) Anmeldenummer: **89105310.0**

(22) Anmeldetag: **24.03.89**

(51) Int. Cl.4: **C08G 75/02 , C08L 81/02**

(30) Priorität: **06.04.88 DE 3811451**

(43) Veröffentlichungstag der Anmeldung:
**11.10.89 Patentblatt 89/41**

(84) Benannte Vertragsstaaten:
**BE DE FR GB IT**

(71) Anmelder: **BAYER AG**

**D-5090 Leverkusen 1 Bayerwerk(DE)**

(72) Erfinder: **Dorf, Ernst-Ulrich, Dr.**
**Bodelschwinghstrasse 16**
**D-4150 Krefeld 1(DE)**
Erfinder: **Schmidt, Manfred, Dr.**
**Erich-Klausener-Strasse 37**
**D-4150 Krefeld(DE)**
Erfinder: **Ebert, Wolfgang, Dr.**
**Doerperhofstrasse 31**
**D-4150 Krefeld(DE)**
Erfinder: **Reinking, Klaus, Dr.**
**Robert-Stolz-Strasse 16 b**
**D-5632 Wermelskirchen 1(DE)**

(54) **Polyarylensulfide mit erniedrigter Kristallisationstemperatur und Verfahren zu deren Herstellung.**

(57) Polyarylensulfide mit erniedrigter Kristallisationstemperatur bei nahezu gleichbleibender Schmelztemperatur werden erhalten, wenn bei der Herstellung der Polyarylensulfide Verzweiger und Kettenabbrecher in bestimmten Verhältnissen zusätzlich zu den üblichen Monomeren eingesetzt werden.

EP 0 336 240 A2

## Polyarylensulfide mit erniedrigter Kristallisationstemperatur und Verfahren zu deren Herstellung

Die Erfindung betrifft Polyarylensulfide mit erniedrigter Kristallisationstemperatur bei nahezu gleichbleibender Schmelztemperatur, die werden erhalten, wenn bei der Herstellung der Polyarylensulfide Verzweiger und Kettenabbrecher in bestimmten Verhältnissen zusätzlich zu den üblichen Monomeren eingesetzt werden.

Polyarylensulfide und ihre Herstellung sind bekannt (z.B. US-PS 3 354 129, EP-OS 171 021).

Polyarylensulfide sind teilkristalline thermoplastische Werkstoffe, die aufgrund ihrer guten Eigenschaften (Wärmeformbeständigkeit, Chemikalienresistenz etc.) in weiten Bereichen eingesetzt werden können.

Es ist bekannt, daß eine verzögert einsetzende Kristallisation eines Thermoplasten in bestimmten Fällen von Vorteil sein kann, beispielsweise um eine frühzeitige Verfestigung der Fließfront beim Spritzgießen zu vermeiden.

Es wurde nun gefunden, daß bestimmte, jeweils für sich bekannten Maßnahmen der Zugabe von bekannten Kettenabbrechern (z.B. DE-OS 3 529 498, 3 529 500, 3 529 501, 3 541 688, 3 601 215) und Verzweigern (vergl. US-PS 3 354 129, 4 282 347) in bestimmten Kombinationen in bestimmten Verhältnissen eine Steuerung der Kristallisationsgeschwindigkeit von Polyarylensulfiden, vorzugsweise Polyphenylensulfid (PPS) erlauben.

Gegenstand der Erfindung ist ein Verfahren zur Herstellung von Polyarylensulfiden aus

a) Dihalogenaromaten der Formel (I)

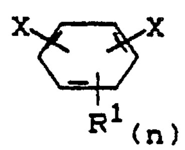

(I),

in der

X für zueinander meta- oder para-ständiges Halogen wie Chlor oder Brom steht und

$R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{14}$-Alkylaryl, $C_7$-$C_{14}$-Arylalkyl sein kann, wobei zwei zueinander orthoständige Reste $R^1$ unter Einbeziehung der benachbarten C-Atome im Ring zu einem $C_5$-$C_{14}$-aromatischen oder bis zu drei Heteroatome wie N, O, S enthaltenden heterocyclischen Ring verknüpft sein können, und

n für die Zahl 1, 2, 3 oder 4 steht,

und/oder Dihalogen(hetero)aromaten, vorzugsweise Dihalogenaromaten der Formel (II)

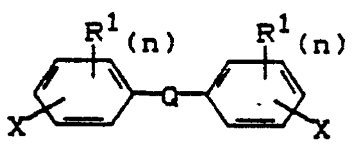

(II),

in der

n, X und $R^1$ die bei Formel (I) angegebene Bedeutung haben,

Q für eine Einfachbindung oder eine Gruppe wie $-CR^1_2-$, -C(O)-, -S(O)-, $-S(O)_2-$, $-NR^1-$, -C(O)O-, $-C(O)NR^1-$ und $[-C(O)]_2N-$, steht, wobei $R^1$ die oben genannte Bedeutung hat, und

b) Alkalisulfiden, bevorzugt Natrium- oder Kaliumsulfid oder deren Mischung, zusammen mit Alkalihydrogensulfide, bevorzugt Natrium- oder Kaliumhydrogensulfid oder deren Mischung, in Form ihrer Hydrate oder wäßrigen Mischungen, gegebenenfalls zusammen mit Katalysatoren oder anderen Hilfsstoffen in

c) einem polaren organischen Lösungsmittel,

dadurch gekennzeichnet, daß 0,1 bis 5 Mol-%, bevorzugt 0,1 bis 2,0 Mol-%, bezogen auf die Dihalogenaromaten der Formel (I) und/oder (II), eines Tri- oder Tetrahalogenaromaten der Formeln (III) oder (IV)

$$ArX_n \qquad\qquad Ar(Ar^1\text{-}X)_n$$

(III) (IV)

in welchen
Ar,Ar[1] $C_5$-$C_{14}$-aromatische oder $C_5$-$C_{14}$-heterocyclischer Reste, bei den bis zu drei Ring C-Atome durch N, O oder S ersetzt sein können, sind
X für Halogen wie Chlor oder Brom, und
n für die Zahl 3 oder 4 steht,
und 0,3 bis 35,0 Mol-%, bevorzugt 0,3 bis 14 Mol-%, bezogen auf die Dihalogenaromaten der Formeln (I) und/oder (II), von Kettenreglern ausgewählt aus der Gruppe der Monohalogenverbindungen, Mercaptane und/oder Phenole, zugesetzt werden, wobei deren molares Verhältnis zu dem der Tri- bzw. Tetrahalogenaromaten von 3:1 bis 7:1, bevorzugt von 4:1 bis 6:1 ist.

Ein weiterer Gegenstand der Erfindung sind die Polyarylensulfide, vorzugsweise Polyphenylensulfid, erhältlich nach dem erfindungsgemäßen Verfahren.

Die Kristallisationstemperaturen der erfindungsgemäß erhältlichen Polyarylensulfide, vorzugsweise Polyphenylensulfide, betragen 190 bis 230° C. Sie liegen im allgemeinen 15 bis 50° C tiefer als diejenigen der bekannten Polyarylensulfide (z.B. gemäß US-PS 3 354 129, EP-OS 171 021, DE-OS 360 12 15).

Beispiele für erfindungsgemäß einsetzbare Dihalogenaromaten der Formeln (I) und (II) sind 1,4-Dichlorbenzol, 1,4-Dibrombenzol, 1,3-Dichlorbenzol, 1,2-Dichlorbenzol, 1,4-Dichlor-2-ethylbenzol, 1,4-Dibrom-2-ethylbenzol, 1-Brom-4-chlor-ethylbenzol, 1,4-Dichlor-2,3,5,6-tetramethylbenzol, 1,4-Dichlor-2-cyclohexylbenzol, 1,4-Dichlor-2-hexylbenzol, 2,5-Dichlordiphenyl, 2-Benzyl-1,4-dichlorbenzol, 2,5-Dibromdiphenyl, 2,5-Dichlor-4′-methyl-diphenyl, 2,5-Dibrom-4′-methyl-diphenyl, 4,4′-Dichlorbiphenyl, 4,4′-Dichlorbenzophenon, 4,4′-Dichlordiphenylsulfon u.s.w. Sie sind allein oder im Gemisch miteinander einsetzbar. Bevorzugt sind 1,4-Dichlorbenzol und/oder 1,4-Dibrombenzol.

Beispiele für erfindungsgemäß einzusetzende Tri- bzw. Tetrahalogenaromaten der Formeln (III) oder (IV) sind 1,2,3-Trichlorbenzol, 1,2,4-Trichlorbenzol, 1,2,4-Tribrombenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 1,2,3,4-Tetrachlornaphthalin, 1,2,4,5-Tetrachlorbenzol, 2,2′-4,4′-Tetrachlorbiphenyl, 2,4,6-Trichlortriazin, 1,3,5-Tris(p-chlorphenyl)benzol, 1,3,5-Tris(m-chlorphenyl)- benzol, 2,4,6-Tris(p-chlorphenoxy)triazin, 2,4,6-Tris(m-chlorphenoxy)triazin, 2,4,6-Tris(p-chlorphenyl)triazin, 2,4,6-Tris(m-chlorphenyl)triazin etc.

Beispiele für erfindungsgemäß einsetzbare Kettenregler sind Monohalogenverbindungen wie 3-Chlordiphenyl, 3-Bromdiphenyl, 4-Chlordiphenyl, 4-Bromdiphenyl, 3-Chlordiphenylsulfid, 3-Bromdiphenylsulfid, 4-Chlordiphenylsulfid, 4-Bromdiphenylsulfid, 3-Chlordiphenylsulfon, 3-Bromdiphenylsulfon, 4-Chlordiphenylsulfon, 4-Bromdiphenylsulfon, (3-Chlorphenyl)phenylketon, (3-Bromphenyl)phenylketon, (4-Chlorphenyl)-phenylketon, (4-Bromphenyl)phenylketon, primäre, sekundäre und tertiäre $C_1$-$C_{20}$Alkylchloride und/oder -bromide;

Mercaptane wie Butylmercaptan, Dodecylmercaptan, Stearylmercaptan, Benzylmercaptan, Thiophenol, 1-Mercaptonaphthalin, 2-Mercaptonaphthalin, 4-Mercaptodiphenyl, 4-Mercaptodiphenylether, 4-Mercaptodiphenylsulfon, 4-Mercaptodiphenylsulfid, 4-Mercaptodiphenylketon, 2-Mercaptobenzoxazol, 2-Mercaptobenzimidazol, 2-Mercaptobenzthiazol und/oder deren Salze wie Li-, Na-, K-, $NH_4$-, Ca-, Mg-, Zn-Mercaptide;

Phenole wie Phenol, p-tert.-Butylphenol, p-Isooctylphenol, 4-Methoxyphenol, 4-Hydroxydiphenylether, 4-Hydroxydiphenylsulfid, 4-Hydroxydiphenylsulfon, 4-Hydroxydiphenylketon, 4-Hydroxydiphenyl, 2-Hydroxynaphthlain und/oder deren Salze wie Li-, Na-, K-Phenolate.

Geeignete organische Lösungsmittel sind z.B Lactame wie N-Alkyllactame, beispielsweise N-Methylpyrrolidon, N-Ethylpyrrolidon, N-Isopropylpyrrolidon, N-Methylpiperidon, N-Methylcaprolactam, N-Ethylcaprolactam, N,N′-Dimethylimidazolidinon, 1-Methyl-1-oxo-phospholan u.s.w. oder deren Gemische.

Der Siedepunkt der Lösungsmittel sollte bei 200° C bis 380° C liegen.

Die erfindungsgemäße Umsetzung kann in verschiedener Weise erfolgen:

Die Alkalisulfide und/oder Alkalihydrogensulfide werden vorzugsweise in Form ihrer Hydrate und wäßrigen Mischungen oder wäßrigen Lösungen eingesetzt und dann entwässert. Die Entwässerung kann partiell sein, erfolgt jedoch vorzugsweise vollständig. Möglich ist auch der Einsatz von wasserfreien Sulfiden. Im Umsetzungsgemisch vorhandenes Wasser kann direkt oder mit Hilfe von Azeotropbildnern, wobei bevorzugt als Azeotropbildner die Dihalogenaromaten der Formel (I) eingesetzt werden, erfolgen. Für die Entwässerung können alle Reaktionspartner gemischt und die Entwässerung des Gesamtgemisches durchgeführt werden. Das Alkalisulfid und/oder Alkalihydrogensulfid kann separat mit einem Teil der

Reaktionskomponenten oder alleine entwässert werden.

In einer weiteren Ausführungsform der Reaktion werden die Reaktionspartner gegebenenfalls zusammen mit einem Reaktionsbeschleuniger bzw. einem Gemisch von Reaktionsbeschleunigern in Anwesenheit des polaren Lösungsmittels kontinuierlich, unter gleichzeitiger Entfernung des Wassers zusammengeführt. Bei dieser Verfahrensweise kann die Umsetzung über die Dosierungsraten gesteuert werden. Längere Verweilzeiten des Wassers können so auch vermieden werden.

Wird völlig entwässert, so kann druckfrei bzw. druckarm bis zu ca. 3 bar Druck umgesetzt werden. Zur Erzielung von höheren Reaktionstemperaturen über den Siedepunkt des Lösungsmittels bzw. der Mischung aus Lösungsmittel und Di- und Polyhalogenaromaten hinaus kann höherer Druck bis zu 50 bar angewendet werden.

Die Reaktion kann kontinuierlich oder diskontinuierlich durchgeführt werden. Die Reaktionszeit kann innerhalb einer weiten Spanne variiert werden. Sie kann 1 bis 48 Stunden, bevorzugt 1 bis 18 Stunden betragen. Die Reaktionstemperturen betragen 150 °C bis 300 °C, vorzugsweise 170 °C bis 280 °C.

Die Zugabe der Verzweiger und Kettenregler kann vor oder während der Entwässerung erfolgen. Eine Zugabe nach beendeter Entwässerung ist ebenfalls möglich. Die Zugabe kann über Dosierung über einen gewissen Zeitraum der Reaktion, portionsweise zu bestimmten Zeiten des Reak tionsablaufes oder direkt durch Zugabe der berechneten Gesamtmenge zu einem definierten Zeitpunkt der Reaktion erfolgen.

Die Aufarbeitung des Umsetzungsgemisches und die Isolierung der Polyarylensulfide kann in bekannter Weise erfolgen.

Das Polyarylensulfid kann direkt aus der Umsetzungslösung oder erst z.B. nach Zugabe von Wasser und/oder verdünnten Säuren nach den üblichen Verfahrensweisen abgetrennt werden, beispielsweise durch Filtration oder durch Zentrifugieren. Nach der Abtrennung des Polyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lösungsmittels und eine anschließende Wäsche, wie oben beschrieben, isoliert werden.

Das Polyarylensulfid kann auch durch Eintragen in organische Lösungsmittel, beispielsweise Alkohole oder Ketone, gefällt und anschließend von Verunreinigungen befreit werden.

Die Aufarbeitung ist sowohl kontinuierlich als auch diskontinuierlich möglich.

Die erfindungsgemäßen Polyarylensulfide können mit anderen Polymeren, üblichen Verfärbungs- und/oder Füllstoffen (vgl. z.B. Modern Plastics Encyclopedia 1988, Vol 64, No. 10A, S. 183-194) und/oder Additiven (vgl. ibid., S. 127-178) versetzt werden. Es können 0,01 bis 100 Gew.-% Zusatzstoffe zugemischt werden.

Die erfindungsgemäßen Polyarylensulfide zeichnen sich durch eine im Vergleich zu bekannten Polyarylensulfiden, die ohne die erfindungsgemäße Kombination von Verzweigern und Kettenreglern hergestellt wurden, durch eine bei teiferer Temperatur einsetzende Kristallisation bei im wesentlichen gleicher Kristallinität und unverändertem Schmelzverhalten aus. Dies erleichtert z.B. die Verarbeitung zu Folien, Fasern und Spritzgußteilen mit langer Fließlänge oder kleinen Querschnitten.

Die erfindungsgemäßen Polyarylsulfide können direkt durch Extrusion, Extrusionsblasen, Spritzgießen oder sonst übliche Verarbeitungstechniken zu Folien, Fasern, Halbzeugen oder Formkörpern verarbeitet werden. Diese können in üblicher Weise Verwendung finden, z.B. als Automobilteile, Armaturen, Elektroteile, z.B. Schalter, elektronische Tafeln, elektronische Bauteile, chemikalienresistente und verwitterungsstabile Teile und Apparate wie Pumpengehäuse und Pumpenflügelräder, Ätzbadschalen, Dichtungsringe, Teile von Büromaschinen und Fernmeldeeinrichtungen sowie Haushaltsgeräten etc.

## Beispiel 1

Herstellung von Polyphenylensulfid gemäß US-PS 3 354 129

In einem mit Rührer ausgerüsteten Autoklaven wurden 129 g Natriumsulfidtrihydrat (= 1 Mol $Na_2S$) und 300 g N-Methylpyrrolidon zusammengegeben. Das Gemisch wurde mit Stickstoff gespült und langsam bis auf 202 °C erwärmt. Dabei destillieren ingesesamt 10 ml Wasser ab (daraus errechnet sich der Restwassergehalt von 1,78 Mol bezogen auf Natriumsulfid in der Reaktionslösung). Der Ansatz wurde anschließend auf ca. 160 °C abgekühlt und 147 g p-Dichlorbenzol (= 1 Mol) in ca. 50 g Methylpyrrolidon hinzugefügt. Man erwärmt das Reaktionsgemisch unter einem Stickstoffvordruck von 2,5 bar in 30 Minuten auf 245 °C und hält diese Temperatur 3 Stunden. Dabei wird ein Enddruck von 14,5 bar erreicht. Nach Abkühlen auf

Raumtemperatur wird ein grauer Feststoff isoliert, der anschließend mit Wasser gewaschen wird. Man trocknet bei 80 ° C im Vakuum und erhält 100,3 g (= 93 %) Poly-p-phenylensulfid mit hellbrauner Farbe.

Beispiel 2-12

In einem 5 1-Reaktionskessel, der mit Thermometer, Rührer, kühlbarer Kolonne, Destillatteiler, Rückflußkühler und zwei Tropftrichter ausgerüstet ist, werden unter Stickstoff 2699,7 g N-Methylcaprolactam, 1,3,5-Tris(4-chlorphenyl)benzol (=TCPB, Einsatzmengen s. Tabelle 1) bzw. 1,3,5-Trichlorbenzol (= TCB, Einsatz mengen s. Tabelle 1) und die Hälfte einer Menge an 1,4-Dichlorbenzol (=DCB, Einsatzmengen s. Tabelle 1) vorgelegt und zum Rückfluß erwärmt. Dazu wird eine Lösung von 1147,5 g Natriumsulfidhydrat, (60 % $Na_2S$) 4,3 g Natriumhydroxid, 141,1 g Caprolactam und wechselnde Mengen (s. Tabelle 1) Natriumphenolat (=NaOø) so zugetropft, daß das zugeführte Wasser gleichzeitig azeotrop mit 1,4-Dichlorbenzol abdestillieren kann. Gleichzeitig wird die zweite Hälfte der Menge 1,4-Dichlorbenzol zur Reaktionsmischung kontinuierlich zugegeben. Zur Erhaltung der Stöchiometrie wird abdestillierendes 1,4-Dichlorbenzol nach Abtrennung des Wassers wieder in den Ansatz zurückgeführt. Nach beendeter Zugabe und beendeter Entwässerung wird die Kolonne auf Rückfluß gestellt, der Ansatz weitere 10 Stunden zum Rückfluß erhitzt und das Produkt anschließend in üblicher Weise isoliert. Die Werte der DSC-Messungen zu den einzelnen Beispielen sind in Tabelle 2 zusammengefaßt.

Tabelle 1

| Einwaagen in g | | | | | |
|---|---|---|---|---|---|
| Beispiel | DCB[1] | TCB[2] | TCPB[3] | Molverhältnis | |
| | | | | NaOØ[4] | Verzw. / Kettenregler |
| 2 (Vergleich)[5] | 1223,0 | - | - | 19,3 | - |
| 3 (Vergleich)[5] | 1212,0 | 9,1 | - | - | - |
| 4 (Vergleich)[5] | 1238,5 | - | 51,1 | 38,6 | 1 : 2,7 |
| 5 | 1224,0 | - | 20,5 | 19,3 | 1 : 3,3 |
| 6 | 1231,0 | - | 30,7 | 38,6 | 1 : 4,4 |
| 7 | 1231,0 | - | 30,7 | 38,6 | 1 : 4,4 |
| 8 | 1238,5 | - | 51,1 | 69,5 | 1 : 4,8 |
| 9 | 1226,7 | - | 10,2 | 14,5 | 1 : 5,0 |
| 10 | 1224,3 | - | 6,8 | 9,7 | 1 : 5,0 |
| 11 | 1243,2 | - | 30,7 | 58,0 | 1 : 6,7 |
| 12 (Vergleich)[5] | 1255,4 | - | 30,7 | 77,3 | 1 : 8,8 |

[1] = Dichlorbenzol
[2] = Trichorbenzol
[3] = 1,3,5-Tris(4-chlorphenyl)benzol
[4] = Natriumphenolat
[5] = außerhalb der Erfindung

Die folgende Tabelle enthält eine Aufstellung der durch DSC-Messung bestimmten Schmelzpunkte (Tm) und der in der Abkühlkurve auftretenden Kristallisationspunkte (Tk), jeweils mit einer Heizrate von 20 K/min gemessen.

Tabelle 2

| Kristallisationswerte in °C | | |
|---|---|---|
| Beispiel | $T_m$ | $T_k$ |
| 1 (US-PS) | 276 | 239 |
| 2 (Vergleich)[1] | 281 | 243 |
| 3 (Vergleich)[1] | 268 | 190[2] |
| 4 (Vergleich)[1] | 262 | 173[2] |
| 5 | 275 | 224 |
| 6 | 271 | 227 |
| 7 | 270 | 222 |
| 8 | 266 | 226 |
| 9 | 275 | 222 |
| 10 | 280 | 209 |
| 11 | 273 | 203 |
| 12 (Vergleich)[1] | 270 | 236 |

[1] außerhalb der Erfindung
[2] nicht thermoplastisch verarbeitbar (zu hochviskos)

## Ansprüche

1. Verfahren zur Herstellung von Polyarylensulfiden aus
a) Dihalogenaromaten der Formel (I)

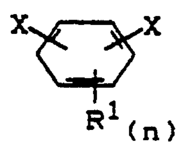

(I),

in der
X für zueinander meta- oder para-ständiges Halogen wie Chlor oder Brom steht und
$R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{14}$-Alkylaryl, $C_7$-$C_{14}$-Arylalkyl sein kann, wobei zwei zueinander orthoständige Reste $R^1$ unter Einbeziehung der benachbarten C-Atome im Ring zu einem $C_5$-$C_{14}$-aromatischen oder bis zu drei Heteroatome wie N, O, S enthaltenden heterocyclischen Ring verknüpft sein können, und
n für die Zahl 1, 2, 3 oder 4 steht,
und/oder Dihalogen(hetero)aromaten, vorzugsweise Dihalogenaromaten der Formel (II)

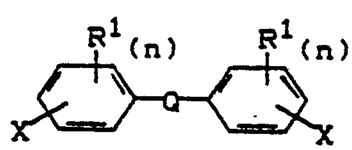

(II),

in der
n, X und $R^1$ die bei Formel (I) angegebene Bedeutung haben,
Q für eine Einfachbindung oder eine Gruppe steht wie $-CR^1_2-$, -C(O)-, -S(O)-, $-S(O)_2$--$NR^1$-, -C(O)O-, -C(O)-$NR^1$- und $[-C(O)]_2N$-steht, wobei $R^1$ die obengenannte Bedeutung hat, und
b) Alkalisulfiden, bevorzugt Natrium- oder Kaliumsulfid oder deren Mischung, zusammen mit Alkalihydrogensulfiden, bevorzugt Natrium-oder Kaliumhydrogensulfid oder deren Mischung, in Form ihrer Hydrate

oder wäßrigen Mischungen, gegebenenfalls zusammen mit Katalysatoren oder anderen Hilfsstoffen in
c) einem polaren organischen Lösungsmittel,
dadurch gekennzeichnet, daß 0,1 bis 5 Mol-%, bevorzugt 0,1 bis 2,0 Mol-%, bezogen auf die Dihalogenaromaten der Formel (I) und/oder (II), eines Tri- oder Tetrahalogenaromaten der Formeln (III) oder (IV)

$$ArX_n \qquad\qquad Ar(Ar^1-X)_n$$

(III) (IV)

in welchen
Ar, $Ar^1$ $C_5$-$C_{14}$-aromatische oder $C_5$-$C_{14}$-heterocyclische Reste, bei den bis zu drei Ring C-Atome durch N, O oder S ersetzt sein können, und
X für Halogen wie Chlor oder Brom, und
n für die Zahl 3 oder 4 steht,
und 0,3 bis 35,0 Mol-%, bevorzugt 0,3 bis 14 Mol-%, bezogen auf die Dihalogenaromaten der Formeln (I) und/oder (II), von Kettenreglern ausgewählt aus der Gruppe der Monohalogenverbindungen, Mercaptane und/oder Phenole, zugesetzt werden, wobei deren molares Verhältnis zu dem der Tri- bzw. Tetrahalogenaromaten 3:1 bis 7:1, bevorzugt von 4:1 bis 6:1 ist.

2. Verfahren nach Anspruch 1, dadurch gekennzeichnet, daß mindestens ein Tri- oder Tetrahalogenaromat aus der Gruppe 1,3,5-Trichlorbenzol, 1,2,4-Trichlorbenzol und 1,3,5-Tris(4-chlorphenyl)benzol verwendet wird.

3. Verfahren nach Anspruch 1, dadurch gekennzeichnet, daß der oder die Tri- oder Tetrahalogenaromat(en) und/oder die Verbindung(en) zur Regelung der Kettenlänge nach Beendigung der Entwässerung dem Reaktionsgemisch zugegeben werden.

4. Verfahren nach Anspruch 1, dadurch gekennzeichnet, daß der oder die Tri- oder Tetrahalogenaromat(en) und/oder die Verbindung (en) zur Regelung der Kettenlänge vor der Entwässerung dem Reaktionsgemisch zugegeben werden.

5. Polyarylensulfide erhältlich nach dem Verfahren des Anspruchs 1.

6. Verwendung von Polyarylensulfiden nach Anspruch 1, gegebenenfalls in Abmischung mit üblichen Füll-und/oder Verstärkungsstoffen und/oder Additiven zur Herstellung von geformten Körpern.